# EUROPEAN PATENT APPLICATION

(11) **EP 2 423 488 A2**
(43) Date of publication of application: **29.02.2012**
(21) Application number: 11177030.1
(22) Date of filing: 09.08.2011
(51) Int. Cl.: F02C 6/08, F02C 9/18

(54) **Fuel actuated bleed air system**

(30) Priority: 23.08.2010 US 376072 P; 07.12.2010 US 962386
(71) Applicant: Honeywell International, Inc., Morristown, New Jersey 07962-2245 (US)
(72) Inventor: Saladino, Aurelio Giuseppe, Morristown, NJ New Jersey 07962-2245 (US)
(74) Representative: Buckley, Guy Julian

(57) **Abstract**

A gas turbine engine bleed air system includes one or more fuel-actuated bleed air supply valves (114-2,114-3,142) and, in some cases, a pneumatically actuated overpressure valve (116). Each fuel-actuated bleed air supply valve is mounted on a bleed air supply conduit (104) and is coupled to a source of pressurized aircraft fuel (130). Each fuel-actuated bleed air supply valve is responsive to the pressurized aircraft fuel to move to a plurality of valve positions and to regulate compressed air pressure in the bleed air supply conduit, downstream of the fuel-actuated bleed air supply valve. The pneumatically actuated overpressure valve (116) is mounted on the bleed air conduit (104) downstream of each of the fuel-actuated bleed air valves and pneumatically regulates or shuts off pressure independent of fuel pressure or electrical signals.

## Description

### PRIORITY CLAIMS

This application claims the benefit of U.S. Provisional Application No. 61/376,072 filed August 23, 2010.

### TECHNICAL FIELD

The present invention generally relates to bleed air systems, and more particularly relates to aircraft bleed air systems.

### BACKGROUND

Many current aircraft use bleed air extracted from the main engines to supply conditioned air for various pneumatic systems throughout the aircraft. This includes commercial air transport aircraft, business jets, and military aircraft that are powered by turbo-jet, turbo-fan, and turbo-prop engines. The air extracted from the main engines is supplied to and controlled by a bleed air system (BAS). The BAS is typically comprised of a series of valves, ducting, and a pre-cooler, and extracts air from different ports of the compressor section of a turbine engine. This high pressure and high temperature air is then regulated and cooled before it is delivered downstream to the aircraft pneumatic systems.

The valves in the BAS need to open, close, regulate and modulate against varying inlet pressures, in order to maintain the desired output pressures. In the current standard industry practice, the valves in the BAS are actuated pneumatically. Typically, bleed air is routed to a pneumatic actuator in which a piston or a diaphragm is pressurized to move a valve element in the flow body of the valve. In order to control the position of the valve element, which in turn controls the downstream pressure of the valves, various devices such as reference pressure regulators, solenoids, torque motors, position sensors, relief valves, etc. are used.

While generally safe, reliable, and robust, there are potential drawbacks associated with using bleed air to actuate the pneumatic actuators. Some of these drawbacks include temperature, vibration, contamination, and the size and weight of the actuators. Temperature, vibration, and contamination can reduce overall component reliability.

Hence, there is a need for a bleed air system that includes valves that are not actuated using bleed air, and that use an actuation medium that has relatively less impact on component reliability due to temperature, vibration, and contamination. The present invention addresses at least these needs.

### BRIEF SUMMARY

In one embodiment, and by way of example only, a gas turbine engine bleed air system includes a bleed air supply conduit, a fuel-actuated bleed air supply valve, and a pneumatically actuated overpressure valve. The bleed air supply conduit is adapted to receive compressed air from a gas turbine engine compressor. The fuel-actuated bleed air supply valve is mounted on the bleed air supply conduit and is coupled to a source of pressurized aircraft fuel. The fuel-actuated bleed air supply valve is responsive to the pressurized aircraft fuel to move to a plurality of valve positions and to regulate compressed air pressure in the bleed air supply conduit, downstream of the fuel-actuated bleed air supply valve. The pneumatically actuated overpressure valve is mounted on the bleed air supply conduit downstream of the fuel-actuated bleed air valve.

In another embodiment, an aircraft bleed air system includes a gas turbine engine, a fuel supply system, a bleed air conduit, and a plurality of bleed air supply valves. The gas turbine engine includes an intake fan, a compressor, a combustor, and a turbine. The fuel supply system is configured to supply pressurized fuel to at least the combustor section. The bleed air conduit is coupled to receive compressed air from the compressor. The fuel-actuated bleed air supply valves are mounted on the bleed air supply conduit and are coupled to receive pressurized fuel from the fuel supply system. At least one fuel-actuated bleed air supply valve is responsive to the pressurized fuel to move to a plurality of valve positions and to regulate compressed air pressure in the bleed air supply conduit, downstream of each fuel-actuated bleed air supply valve.

In yet another embodiment, an aircraft bleed air system includes a gas turbine engine, a fuel supply system, a bleed air conduit, a plurality of fuel-actuated bleed air supply valves, a fuel-actuated pressure regulating valve, and a pneumatically actuated overpressure valve. The gas turbine engine includes an intake fan, a compressor, a combustor, and a turbine. The fuel supply system is configured to supply pressurized fuel to at least the combustor section. The bleed air conduit is coupled to receive compressed air from the compressor. The fuel-actuated bleed air supply valves are mounted on the bleed air supply conduit and are coupled to receive pressurized fuel from the fuel supply system. At least one fuel-actuated bleed air supply valve is responsive to the pressurized fuel to move to a plurality of valve positions and regulate compressed air pressure in the bleed air supply conduit, downstream of each fuel-actuated bleed air supply valve. The fuel-actuated pressure regulating valve is mounted on the bleed air supply conduit downstream of the fuel-actuated bleed air supply valve. The fuel-actuated pressure regulating valve is coupled to receive pressurized fuel from the fuel supply system and responsive thereto to regulate compressed air pressure in the bleed air supply conduit, downstream of the fuel-actuated pressure regulating valve. The pneumatically actuated overpressure valve is mounted on the bleed air conduit downstream of each of the fuel-actuated bleed air valves.

Furthermore, other desirable features and characteristics of the bleed air system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:

FIG. 1 depicts a schematic representation of an embodiment of an aircraft bleed air control system; and

FIG. 2 depicts a schematic representation of an example fuel-actuated valve that may be used to implement the system of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description. In this regard, although an embodiment of the invention is described herein as being implemented with a turbofan gas turbine engine having a multi-stage compressor, it will be appreciated that the invention may be implemented with other types of gas turbine engines and with gas turbine engines having other numbers (more or less) of compressor stages.

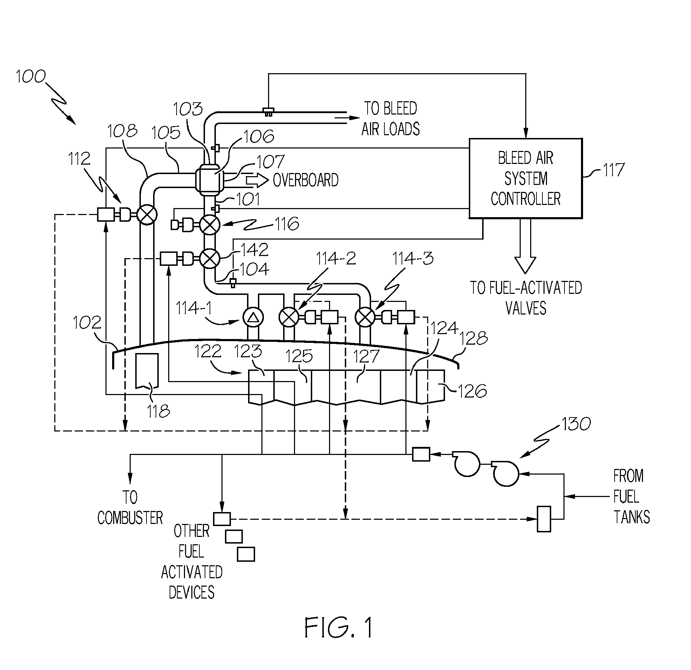

Turning to FIG. 1, a schematic representation of an embodiment of an aircraft bleed air control system 100 that may be used to supply bleed air to, for example, an environmental control system, is depicted. The system 100 includes a gas turbine engine 102, a bleed air supply conduit 104, a heat exchanger 106, a fan air conduit 108, a fan air valve (FAV) 112, a plurality of bleed air supply valves 114 (e.g., 114-1, 114-2, 114-3), a manifold pressure regulating valve 142, an overpressure valve 116, and a bleed air system controller 117. The gas turbine engine 102 includes an intake fan 118, a compressor 122, a combustor 124, and a turbine 126, all disposed within a case 128.

The intake fan 118 draws air into the gas turbine engine 102 and accelerates it. A fraction of the accelerated air exhausted from the intake fan 118 is directed through a non-illustrated bypass flow passage within the engine case 128 and, as will be describe further below, into the fan air conduit 108. The remaining fraction of air exhausted from the intake fan 118 is directed into the compressor 122. The compressor 122, which is preferably a multi-stage compressor, raises the pressure of air directed into it via the intake fan 118. In the depicted embodiment, the compressor 122 is a multi-stage compressor that includes a low pressure stage port 123, an intermediate pressure stage port 125, and a high pressure stage port 127. The compressed air is then directed into the combustor 124.

The compressed air supplied to the combustor 124 is mixed with fuel supplied from a fuel supply system 130. The fuel/air mixture is ignited using one or more non-illustrated igniters, and high energy combusted air is then directed into the turbine 126. The combusted air expands through the turbine 126, causing it to rotate. The air is then exhausted via an exhaust gas outlet. As the turbine 126 rotates, it drives equipment in, or coupled to, the gas turbine engine 102. For example, in the depicted embodiment, the turbine 126 drives the compressor 122. It will be appreciated that the gas turbine engine 102 is not limited to the configuration depicted in FIG. 1 and described herein, but could be any one of numerous types of gas turbine engines. Moreover, a gas turbine engine need not be the source of the bleed air that is supplied to the remainder of the system 100.

Bleed air from each of the compressor stage ports 123, 125, 127 is also selectively supplied to the bleed air supply conduit 104. In particular, at least in the depicted embodiment, the bleed air supply conduit 104 is coupled to receive relatively low pressure bleed air from the low pressure compressor stage port 123 via a low pressure bleed air supply valve 114-1. The bleed air supply conduit 104 is also coupled to receive relatively intermediate pressure bleed air from the intermediate pressure compressor stage port 125 via an intermediate pressure bleed air supply valve 114-2, and relatively high pressure bleed air from the high pressure compressor stage port 127 via a high pressure bleed air supply valve 114-3. It will be appreciated that the bleed air supply valves 114 may be variously configured. In the preferred implementation, however, the low pressure bleed air supply valve 114-1 is implemented using a check valve, whereas the intermediate pressure bleed air supply valve 114-2 and the high pressure bleed air supply valve 114-3 are both implemented using fuel-actuated valves. These valves 114-2, 114-3 are also preferably configured as pressure regulating valves. That is, the intermediate pressure bleed air supply valve 114-2 or the high pressure bleed air supply valve 114-3, when opened, are controlled to regulate compressed air pressure in the bleed air conduit 104, downstream of the these valves. In some embodiments, one of bleed air supply valves 114-2 or 114-3 may be configured as a pressure regulating valve, whereas the other 114-3 or 114-2 is configured as a shut-off valve that simply moves between an open position and a closed position.

As FIG. 1 further depicts, bleed air that flows into the bleed air supply conduit 104 is supplied to various non-illustrated bleed air loads via the heat exchanger 106. The heat exchanger 106, which may be implemented using any one of numerous heat exchanger configurations, includes a bleed air inlet 101, a bleed air outlet 103, a cooling air inlet 105, and a cooling air outlet 107. The heat exchanger 106, via the bleed air inlet 101, is coupled to receive the flow of bleed air from the bleed air supply conduit 104. The heat exchanger 106 is also coupled to receive, via the cooling air inlet 105, a flow of relatively cool fan air from the fan air conduit 108. The fan air conduit 108, as noted above, is coupled to receive the relatively cool fan air from the intake fan 118 (or from a suitable point in the gas turbine engine bypass section downstream of the intake fan). In either case, the heat exchanger 106 uses the relatively cool fan air in the fan air conduit 108 to cool the relatively hot engine bleed air in the bleed air supply conduit 104 to a desired temperature. The temperature of the engine bleed air exiting the heat exchanger 106 is controlled using the FAV 112.

The FAV 112 is mounted on the fain air conduit 108 and is coupled to receive valve position commands from the bleed air system controller 117. The FAV 112, in response to the position commands it receives, moves to the commanded position to control the flow of fan air entering the heat exchanger 106, and thereby control the temperature of the engine bleed air exiting the heat exchanger 106. Although the FAV 112 may be variously implemented to carry out its functionality, in the depicted embodiment it is preferably implemented as a fuel-actuated valve.

The overpressure valve 116 is mounted on the bleed air supply conduit 104 downstream of each of the bleed air supply valves 114. The overpressure valve 116 is implemented using a pneumatically actuated valve, and is configured to selectively allow or prevent bleed air from flowing into the heat exchanger 106. In particular, the overpressure valve 116 is normally open and is configured to move to a closed position if bleed air supply pressure reaches a predetermined pressure, thereby preventing overpressure of the bleed air supply conduit 104 and the downstream loads. It will be appreciated that the overpressure valve 116 may be implemented using any one of numerous pneumatically actuated valves that may be configured to implement this function. In one embodiment, the overpressure valve 116 may be pneumatically actuated and electrically controlled. It is further noted that the intermediate pressure bleed air supply valve 114-2, the high pressure bleed air supply valve 114-3, as described above, and the pressure regulating valve 142, as will be described below, are fuel-actuated, but electronically controlled. The pneumatically actuated overpressure valve 116 provides backup control in the highly unlikely event of an electrical failure and/or a loss of fuel control pressure to the intermediate pressure bleed air supply valve 114-2, the high pressure bleed air supply valve 114-3, and pressure regulating valve 142.

As noted above, the system 100 also includes the pressure regulating valve 142. The pressure regulating valve 142, similar to the fuel-actuated bleed air valves 114-2, 114-3, is configured to regulate the pressure in the bleed air supply conduit 104. However, the pressure regulating valve 142 is controlled to regulate to a lower pressure than the fuel-actuated bleed air valves 114-2, 114-3. It will be appreciated that the pressure regulating valve 142 may be implemented using any one of numerous types of pressure regulating valves. In the depicted embodiment, however, the pressure regulating valve 142 is implemented using a fuel-actuated valve.

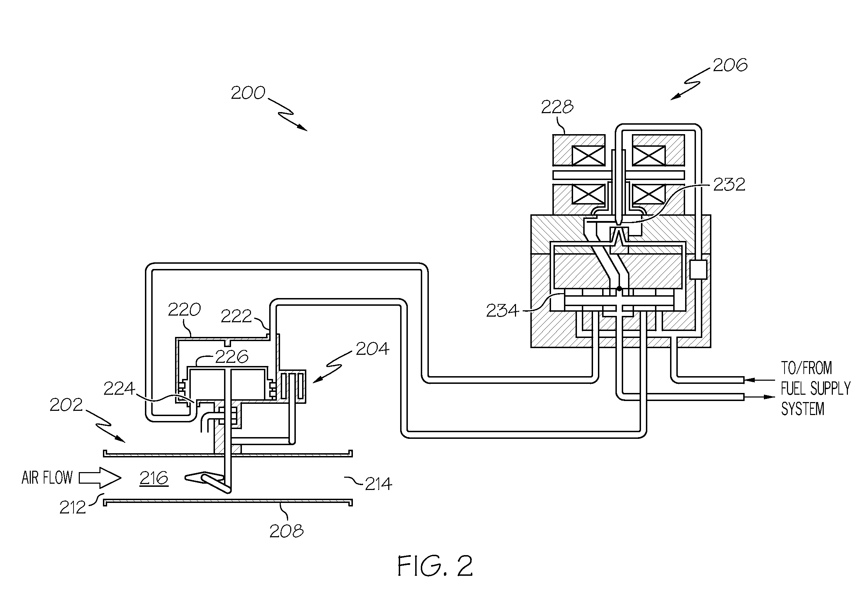

The bleed air system controller 117 is coupled to receive various input commands and a plurality of sensor signals. The input commands may be, for example, representative of a desired bleed air system temperature, and may be supplied from any one of numerous non-illustrated external sources or may be fixed, internally stored values. The sensor signals are representative of various system parameters within the system 100. The number and type of sensor signals may vary, and may include one or more temperature sensors, pressure sensors, and flow sensors, just to name a few. No matter the number and type of sensors used, the bleed air system controller 117 controls the positions of each of the fuel-actuated valves; namely, the FAV 112, the intermediate pressure bleed air supply valve 114-2, the high pressure bleed air supply valve 114-3, and the pressure regulating valve 142. It will be appreciated that each of the fuel-actuated valves 112, 114-2, 114-3, 142 may be variously configured. One particular configuration is depicted in FIG. 2, and with reference thereto will now be described.

The depicted fuel-actuated valve 200, which may be used to implement the FAV 112, the intermediate pressure bleed air supply valve 114-2, the high pressure bleed air supply valve 114-3, and the pressure regulating valve 142, includes a valve 202, a valve actuator 204, and an actuator control device 206. The valve 202 includes a flow body 208 that has an inlet port 212, an outlet port 214, and a flow passage 216 that extends through the flow body 208 between the inlet and outlet ports 212, 214. The flow body 208 may be constructed of any one of numerous suitable materials and, while it preferably has a circular cross section, the flow passage 216 may have any one of numerous suitable cross sectional shapes.

A valve element 218 is disposed within the flow passage 216, and is movably mounted on the flow body 208. The valve element 218 is movable to a plurality of valve positions between a closed position and a plurality of open positions. In the closed position, fluid flow through the flow passage 216 is blocked, whereas in an open position, which is depicted in FIG. 2, fluid flow may flow through the flow passage 216. The valve element 218 may be variously configured to implement its functionality. For example, it may be configured as a butterfly plate, a globe valve element, or a gate valve element, just to name a few. No matter its specific configuration, the valve element 218 is moved to a valve position via the valve actuator 204.

The valve actuator 204 is coupled to the flow body 208 and is also coupled to the valve element 218. The valve actuator 204 includes a housing 220 having a fluid inlet 222 and a fluid outlet 224, and a piston 226 disposed within the housing 220. The fluid inlet 222 is coupled to receive fuel from the actuator control device 206, and the fluid outlet 224 is coupled to supply fuel to the actuator control device 206. The valve actuator 204 is configured, based on the fuel pressure across the piston 226, to supply a drive force to the valve element 218 that causes the valve element 218 to move to a valve position.

The actuator control device 206 may be variously implemented, but in the depicted embodiment it is implemented as an electro-hydraulic servo valve (EHSV). The EHSV includes, for example, a torque motor 228 that receives valve command signals from the bleed air system controller 117 and, in response to the received valve command signals, moves to a position that, for example, is proportional to the current in the valve command signals. A jet pipe 232 is coupled to receive pressurized fuel from the fuel supply system 130, and is additionally coupled to the torque motor 228. The jet pipe 232, in response to movement of the torque motor 228, controls the supply of pressurized fuel to the ends of a spool 234, to thereby control the position of the spool 234. As may be readily apparent, the position of the spool 234 in turn moves the position of the valve actuator 204 and concomitantly the valve 202.

The bleed air control system 100 described herein uses fuel as the actuation medium to actuate the bleed air system valves. There are many benefits to using fuel instead of bleed air as the actuation medium. For example, when compared to bleed air, fuel is relatively cooler and cleaner, it can act as a lubricant and a damping medium, and it is supplied at a relatively constant and relatively high pressure. The relatively lower fuel temperatures enable electrical devises on the bleed air system valves to operate at design temperatures without the need for cooling air, spacers, or remote mounting, which provides easier installation and increased overall reliability.

Fuel is also cleaner than bleed air. Thus, the reliability of contamination sensitive components of the bleed air system valves will increase, as will the reliability of the overall system. Moreover, because fuel pressure is typically higher than bleed air pressure, the bleed air system valve actuators can be designed smaller, while providing better force margins and better overall valve response. Smaller actuators reduce weight and ease installation. Smaller and lighter bleed air valves also result in reduced engine vibration amplifications.

The bleed air control system 100 described herein also implements a primary electronic control mode and a pneumatic backup mode. More specifically, in the highly unlikely, yet postulated event that the intermediate pressure bleed air supply valve 114-2, the high pressure bleed air supply valve 114-3, or the pressure regulating valve 142 were to become inoperable in an open position, due to either an electronic or fuel system failure, the overpressure valve 116 would pneumatically regulate or shut off pressure downstream, and do so independent of the fuel system.

The embodiments described herein include fuel actuated valves for use in an aircraft environmental control bleed air system. The embodiments can be applied to any aircraft having an environmental control system that relies on bleed air from the main engines. This includes military aircraft, large commercial transport aircraft, regional transport aircraft, business jets, helicopters, and any other form of aircraft that utilizes a bleed air system.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An aircraft bleed air control system, comprising:
a bleed air supply conduit adapted to receive compressed air from a gas turbine engine compressor;
a fuel-actuated bleed air supply valve mounted on the bleed air supply conduit and coupled to a source of pressurized aircraft fuel, the fuel-actuated bleed air supply valve responsive to the pressurized aircraft fuel to move to a plurality of valve positions and regulate compressed air pressure in the bleed air supply conduit, downstream of the fuel-actuated bleed air supply valve; and
a pneumatically actuated overpressure valve mounted on the bleed air supply conduit downstream of the fuel-actuated bleed air valve.

2. The system of Claim 1, further comprising:
a fuel-actuated pressure regulating valve mounted on the bleed air supply conduit downstream of the fuel-actuated bleed air supply valve, the fuel-actuated pressure regulating valve coupled to the source of pressurized aircraft fuel and responsive thereto to regulate compressed air pressure in the bleed air supply conduit, downstream of the fuel-actuated pressure regulating valve.

3. The system of Claim 2, wherein:
the fuel-actuated bleed air supply valve is controlled to regulate compressed air pressure in the bleed air supply conduit to a first pressure;
the fuel-actuated pressure regulating valve is controlled to regulate compressed air pressure in the bleed air supply conduit to a second pressure; and
the first pressure is greater than the second pressure.

4. The system of Claim 1, wherein the fuel-actuated bleed air supply valve comprises:
a flow body including a flow passage through which bleed air may flow;
a valve element movably mounted within the flow passage, the valve element movable to the plurality of valve positions; and
a valve actuator coupled to the valve element and further coupled to the source of pressurized aircraft fuel, the valve actuator responsive to the pressurized aircraft fuel to move the valve element to a valve position.

5. The system of Claim 4, wherein the valve actuator comprises:
a housing having a fluid inlet and a fluid outlet; and
a piston disposed within the housing and fluidly isolating the fluid inlet and the fluid outlet,
wherein the valve actuator is responsive to a difference in aircraft fuel pressure across the piston to move the valve element.

6. The system of Claim 5, further comprising:
an actuator control device in fluid communication with the fluid inlet and the fluid outlet, the actuator control device adapted to receive valve command signals and configured, in response thereto, to control the aircraft fuel pressure across the piston.

7. The system of Claim 1, further comprising:
a fan air conduit adapted to receive fan air from a gas turbine engine intake fan; and
a fuel-actuated fan air valve mounted on the fan air conduit, the fuel-actuated fan air valve coupled to the source of pressurized aircraft fuel and responsive to the pressurized aircraft fuel to move to a valve position.

8. An aircraft bleed air control system, comprising:
a gas turbine engine including an intake fan, a compressor, a combustor, and a turbine;
a fuel supply system configured to supply pressurized fuel to at least the combustor section;
a bleed air conduit coupled to receive compressed air from the compressor; and
a plurality of fuel-actuated bleed air supply valves mounted on the bleed air supply conduit and coupled to receive pressurized fuel from the fuel supply system, at least one of the fuel-actuated bleed air supply valves responsive to the pressurized fuel to move to a plurality of valve positions and regulate compressed air pressure in the bleed air supply conduit, downstream of each fuel-actuated bleed air supply valve.

9. An aircraft bleed air control system, comprising:
a gas turbine engine including an intake fan, a compressor, a combustor, and a turbine;
a fuel supply system configured to supply pressurized fuel to at least the combustor section;
a bleed air conduit coupled to receive compressed air from the compressor;
a plurality of fuel-actuated bleed air supply valves mounted on the bleed air supply conduit and coupled to receive pressurized fuel from the fuel supply system, at least one of the fuel-actuated bleed air supply valves responsive to the pressurized fuel to move to a plurality of valve positions and regulate compressed air pressure in the bleed air supply conduit, downstream of each fuel-actuated bleed air supply valve;
a fuel-actuated pressure regulating valve mounted on the bleed air supply conduit downstream of the fuel-actuated bleed air supply valve, the fuel-actuated pressure regulating valve coupled to receive pressurized fuel from the fuel supply system and responsive thereto to regulate compressed air pressure in the bleed air supply conduit, downstream of the fuel-actuated pressure regulating valve; and
a pneumatically actuated overpressure valve mounted on the bleed air conduit downstream of each of the fuel-actuated bleed air valves.
